# EUROPEAN PATENT APPLICATION

(11) **EP 4 531 010 A1**
(43) Date of publication of application: **02.04.2025**
(21) Application number: 23200405.1
(22) Date of filing: 28.09.2023
(51) Int. Cl.: G07C 9/00, A47G 29/14, G06Q 10/08, G06Q 10/0836, G07F 17/12, H04W 4/80

(54) **A PARCEL LOCKER COMPRISING AN AUTONOMOUS SECOND UNIT INCLUDING A NEAR-FIELD COMMUNICATION UNIT, AND A METHOD FOR SERVER-SIDE PAIRING OF A PARCEL LOCKER AND AN AUTONOMOUS SECOND UNIT, AND A METHOD FOR OPENING A COMPARTMENT DOOR OF A COMPARTMENT USING A NEAR-FIELD COMMUNICATION UNIT**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

An autonomous second unit (200) comprising
- a near-field communication unit (210) for receiving a user code and/or electronic token;
- a second energy storage (220) for powering the second unit (200);
- a second communication unit (240) including a short-range second communication unit (242) for communicating with a parcel locker (110);
- a second controller (230) comprising at least one second processor and at least one second memory including program code, wherein the memory and the program code is configured to cause the processor to either match a received user code with one or more electronic tokens stored on the second memory, and cause the short-range second communication unit (242) to send the linked one or more electronic tokens to a short-range parcel communication unit (132) of a parcel locker as a function of a positive match; or
forward an electronic token received by a recipient via the near-field communication unit (210) to a short-range parcel communication unit (132) of a parcel locker.

## Description

### Field of the Invention

The present invention relates to a method for server-side pairing of a parcel locker and an autonomous second unit such that the autonomous second unit can be used in combination with a parcel locker or service point comprising one, two or more parcel lockers.

### Background of the Invention

Present day, the fleet of parcel lockers can be divided into two groups. The first group of parcel lockers are hard-wired to an electric source and can thus use long-range wireless communication or wired communication to communicate directly with a distribution server. The first group of parcel lockers will typically be operated by a person by using a pin pad or touch screen or by scanning a QR code. The second group of parcel lockers are off-grid and powered by a local power source such as a battery pack. The second group of parcel lockers do not include long-range communication and cannot communicate with a distribution server directly. The lack of long-range communication makes the second group of parcel lockers dependent on third-party devices for communicating with the distribution server. In many embodiments, the third-party device is required to have a specific app for ensuring secure communication. This will exclude some users from using the second group of parcel lockers if the users do not have a third-party device, where the app can be installed or if the users do not want to install the app.

Thus, there is a need for improving the second group of parcel lockers, such that said parcel lockers can be used and operated by people without a suitable third-party device and/or persons who do not want to install an app or an additional app. This second group of parcel lockers is also called lean parcel lockers. Examples of the second group of parcel lockers are described in WO2019161870 or WO2019161872.

Furthermore, a person cannot place a package in the present day second group of parcel lockers without using a third-party device with an app for communicating with the parcel lockers. Thus, there is a need for an improvement of the second group of parcel lockers such that any person can place a package in a compartment of the parcel locker which can then be collected by a courier or by any other third party. This will allow people without a suitable third-party device to send packages using the parcel locker, and/or allow persons who do not want to install an app to send packages using the parcel locker.

### Object of the Invention

It is an object of the invention to provide a method for server-side pairing a parcel locker with an autonomous second unit such that said parcel locker becomes controllable using the autonomous second unit, because this method will enable any known parcel locker belonging to a second group of lean parcel lockers to be upgraded at a factory or in-field.

It is an object of the invention to provide a parcel locker for distribution of items with an autonomous near-field communication unit including a method for opening a compartment door of a compartment using a near-field communication unit. The parcel locker may be a single parcel locker or form part of a service point comprising one, two or more parcel lockers, one of which comprises an autonomous second unit.

### Description of the Invention

An object of the invention is a method for server-side pairing of a parcel locker and an autonomous second unit, wherein the parcel locker comprises a plurality of compartments including compartment doors with lock units for controlling access to the plurality of compartments, and a parcel control unit including a short-range parcel communication unit. The parcel control unit is configured to control the lock unit as a function of instructions received via the short-range parcel communication unit. The method comprises steps of
- attaching an autonomous second unit to the parcel locker, wherein the autonomous second unit comprising
   a near-field communication (NFC) unit, a second energy storage, a second controller, and a second communication unit including
   a short-range second communication unit and optionally a long-range second communication unit for communicating with a distribution server,
- server-side pairing of the autonomous second unit and the parcel locker by
   - exchanging encryption keys with a distribution server via the short-range second communication unit through a third-party device or via the optional long-range second communication unit, and/or
   - linking the autonomous second unit to the parcel locker at the distribution server by updating a server database or by sending a service point ID linked to the parcel locker to the autonomous second unit.

Thereby, a method is provided for equipping any lean parcel locker such as, but not limited to, the parcel lockers described in WO2019161870 or WO2019161872 with an autonomous second unit such that any person can open a compartment door using a near field communication protocol such as an NFC unit, which can be part of a smart phone or similar device. The smart phone is not required to have a specialized app as android based smart phones and iOS based smart phones have an electronic wallet wherein the information for the communication via the NFC can be stored. The second unit is equipped with the short-range second communication unit such that the second unit can communicate with the parcel locker via a suitable short-range communication protocol which can be Bluetooth, or Zigbee, or preferred Bluetooth Low-Energy (BLE).

The use of the term "second unit" does not mean that there is a first unit with the same features. Instead, the parcel locker is seen as the "first unit" and the autonomous second unit is an addition to the parcel locker. Hence the parcel locker and the second unit do not share any electrical components. But the parcel locker and the second unit are preferably mechanically connected.

Thereby, the autonomous second unit is in effect acting as a smartphone with a suitable short-range communication unit and therefore the installation of the autonomous second unit requires no modifications of the parcel locker with the exempt of attaching the autonomous second unit. In theory, the autonomous second unit could be attached to a wall or a pillar or pylon or a neighbouring parcel locker adjacent to or near the parcel locker and it would still be possible to use the autonomous second unit to control the parcel locker. Many persons find it much simpler to use the NFC chip of a smartphone compared to opening of a specialised app and pressing a button to open the locker, since the telephone is only required to be placed near the near-field communication unit.

The step of attaching the autonomous second unit to the parcel locker can be performed by using magnetic force, screws, and/or adhesive. The step of attaching can be performed at a parcel locker factory. However, the step of attaching can also be performed in-field on a parcel locker positioned at any location. It is expected that the method can be performed by a skilled person within 10-20 minutes when performing the method on an in-field parcel locker. The speed of installation is very important if the autonomous second unit is to be retrofitted on a thousand parcel lockers or more. The speed of installation is in part made this fast by the autonomous second unit being autonomous since it is not required to electronically hardwire the autonomous second unit with the parcel control unit via a suitable cord. The speed of installation is achieved by the autonomous second unit including the near-field communication unit, the second energy storage, the second controller, and the second communication unit as there is no need to hardwire with the controller of the parcel locker.

The server-side pairing of the autonomous second unit to the parcel locker is performed by the autonomous second unit exchanging encryption keys with a distribution server by communicating directly via the optional long-range second communication unit or via the short-range second communication unit through a third-party device. The second unit can function without the long-range second communication unit hence said long-range second communication unit is optional. Thereby, the second unit and the distribution server can establish an encrypted communication, and this will allow the autonomous second unit to receive user codes or electronic tokens without the user codes or electronic tokens being readable to a third-party. The exchange of encryption keys is the exchange of the public encryption keys. The private encryption keys are not exchanged.

There may be a step of linking the autonomous second unit to the parcel locker at the distribution server. The distribution server will have a server database including data that the autonomous second unit with a second unit ID is in short-range communication distance with the parcel locker having parcel locker ID at a service point with service point ID, thus the distribution server can send a user code including an electronic token to the autonomous second unit as the second unit will be able to communicate with the parcel locker having parcel locker IDs. The database may include one, two or more parcel lockers with different parcel locker IDs at said service point ID that are in short-range communication distance with the autonomous second unit with the second unit ID - thereby the second unit can send instruction to one, two or more parcel lockers even though the second unit is only attached to one of the parcel lockers. Alternatively, the autonomous second unit may receive the service point ID linked to the parcel locker, wherein the autonomous second unit will include said service point ID in any communication with the distribution server. Both alternatives may be performed without any negative effect.

The parcel locker may be controllable by receiving encrypted tokens as described in WO2019161870 or WO2019161872 or by similar encrypted means. The autonomous second unit may receive such an encrypted token from the distribution server via the long-range second communication unit and said encrypted token will, following a correct user code sent to the near-field communication unit, cause the autonomous second unit to send said encrypted token to the parcel control unit via the short-range second communication unit, and the encrypted token will cause the parcel locker to unlock one or more compartment doors. Thereby allowing one or more parcels to be collected from and/or positioned in the parcel locker. The encrypted tokens for the parcel locker may be encrypted using a public encryption key that is unique for the parcel locker and thus the autonomous second unit will not be able to decrypt the encrypted tokens for the parcel locker. Thus, even if a person in bad faith removes the autonomous second unit, then the person in bad faith will not be able to access the parcel locker. The second unit may receive the electronic token or encrypted token from a third party device communicating with the near-field communication unit, wherein the second unit will forward the electronic token or encrypted token via the short-range second communication unit to the parcel locker.

The long-range second communication unit may communicate using GSM communication protocol or similar suitable long-range communication protocol. The long-range second communication unit may comprise an NB-IOT unit or similar energy efficient unit.

In an embodiment, the method may be performed on an in-field parcel locker.

The in-field parcel locker is retrofitted at the service point location with an autonomous second unit. Thereby, the method enables a fleet of lean lockers to be upgraded with the autonomous second unit.

In an embodiment, the step of server-side pairing may include linking the autonomous second unit to one or more neighbouring parcel lockers positioned near or at the parcel locker with the autonomous second unit. This reduces the number of needed autonomous second units to enable a fleet of parcel lockers to be controllable by the near field communication unit. In many cases, two or more parcel lockers are positioned side by side as shown in one of the figures or at least positioned so close to each other that the neighbouring parcel lockers are within the reach of a short-range communication protocol such as Bluetooth low energy. The two or more parcel lockers form a service point. It is only necessary to equip one of the parcel lockers with the autonomous second unit since the autonomous second unit is linked to all the parcel lockers at the service point. The linking can be performed for the two or more parcel lockers in the same way as for a single parcel locker as described earlier.

This also reduces any potential confusion at the service point as the user can only position a smart phone or similar device having a complementary near field communication unit at one second unit compared to a solution wherein each parcel locker has a second unit or a near-field communication unit. Since the autonomous second unit can communicate with the parcel lockers via the short-range second communication unit with the parcel lockers, then it is possible to send electronic tokens and thereby instructions to all parcel lockers.

At the service point the autonomous second unit could be attached to a wall or pylon or something similar instead of one of the parcel lockers, however this would increase the complexity since one would be required to set up a pylon or request a right for attaching the autonomous second unit to a wall.

In an embodiment, the method may include steps of
- opening a compartment door of a compartment of the plurality of compartments;
- creating at least one aperture in said compartment door; and the step of attaching is performed by attaching the autonomous second unit to said compartment door using the at least one aperture.

This again enables fast in-field updating of a parcel locker as a maintenance person instructs the parcel locker to open a suitable compartment door followed by creating at least one aperture and then attaching the autonomous second unit. It can be done on any of the compartment doors, and it is expected that the method can be performed in 10 to 20 minutes. The at least one aperture enables easier mechanical connection.

In an embodiment, the autonomous second unit may comprise a first part including at least a near-field communication unit to be attached to the exterior side of the parcel locker and a second part attached to the interior side of the parcel locker, wherein the first part and the second part are at least electronically connected through said at least one aperture.

The interior side is the side of the gate facing the inside of the compartment, while the exterior side is the side facing the ambient atmosphere.

The first part of the autonomous second unit must include the near-field communication unit and preferably one or two antennas of the second communication unit i.e., the antennas of the short-range second communication unit and the optional long-range second communication unit as this ensures better wireless strength.

All electronics including the second energy storage can be installed in the first part of the autonomous second unit. However, the second energy storage and the second controller are preferably forming part of the second part of the autonomous second unit, in part because the second energy storage can be rather large, and it limits the possibility of tinkering or manipulating the second controller.

The second energy storage may be a suitable battery unit or a hydrogen storage and fuel cell. The second energy storage may have enough energy to power the autonomous second unit for three years, preferably for five years, or more preferably for 10 years.

An object of the invention is achieved by a parcel locker for distribution of items, the parcel locker comprises
- a plurality of compartments including compartment doors with lock units for controlling access to the plurality of compartments,
- a short-range parcel communication unit,
- a parcel locker controller comprising at least one processor and at least one locker memory that includes program code, wherein the locker memory and the program code is configured to cause the processor to instruct one or more of the lock units to open as a function of a received electronic token via the short-range controller communication unit;
- an autonomous second unit comprising
   - a near-field communication unit for receiving a user code and/or electronic token;
   - a second energy storage for powering the second unit;
   - a second communication unit including a short-range second communication unit for communicating with the parcel locker;
   - a second controller comprising at least one second processor and at least one second memory including program code, wherein the memory and the program code is configured to cause the processor to either

   match a received user code with one or more electronic tokens stored on the second memory, and cause the short-range second communication unit to send the one or more electronic tokens to the short-range parcel communication unit as a function of a positive match; and/or
   forward an electronic token received by a recipient via the near-field communication unit to the short-range parcel communication unit.

The parcel locker and the autonomous secondunit function independently of each other, however the parcel locker and the autonomous secondunit can communicate with one another. The parcel locker may be, but not limited to, a parcel locker as described in WO2019161870 or WO2019161872, wherein communication with the parcel locker is achieved via the short-range controller communication unit. The communication will in almost all cases be encrypted, and thus electronic token(s) is/are sent to the parcel locker which electronic token(s) contain(s) instructions for the parcel locker controller.

The autonomous second unit is designed to communicate with the parcel locker using a short-range communication protocol such as Bluetooth or Bluetooth low energy (BLE). Other protocols can be used. This eliminates the need for hardwiring the autonomous second unit and the parcel locker controller, which makes installation faster and enables retrofitting. It is expected that the retrofitting can be performed in 15 minutes or less. Furthermore, the hardwire would be a potential security risk. Furthermore, the autonomous second unit enables control of neighboring parcel lockers as the autonomous second unit can communicate similar to a smart phone with an app.

The one or more electronic tokens stored on the second memory and data linking user codes to the one or more electronic tokens is transferred by the courier to the second unit when the courier stores parcel or packages in the parcel locker. The transfer may be performed without the courier activating the transfer i.e. the transfer is performed behind the scenes by the courier app or the transfer may be performed after the courier specifically activates the transfer. The amount of data to be transferred is not great compared with the bandwidth of Bluetooth or Bluetooth low energy, however if the transfer is hidden there is a greater risk for the transfer not being completed. This can be solved by prompting through the courier app, the courier to stay at the parcel locker.

A recipient of a package stored in the parcel locker according to the invention may receive a user code via SMS or e-mail or by any other means, wherein the smart device stores the user code in a specialised app or Android wallet or Apple wallet or an equivalent for the operation system of the smart device. The autonomous second unit may if equipped with the optional long-range second communication unit be configured to regularly contact the distribution server for receiving user codes and the electronic tokens linked to the user codes. Communication with the distribution server is established using the long-range second communication unit. The user codes and the electronic tokens are stored on the second memory and typically the data is stored in encrypted form.

Alternatively, the recipient forwards an electronic token to the near-field communication unit via a suitable protocol. The second unit having received the electronic token then forwards the electronic token to the parcel locker via the short-range parcel communication unit using Bluetooth or Bluetooth low energy (BLE) or similar protocols.

The autonomous second unit may be configured to contact the distribution server once a day, or twice a day, or once every weekday, and not during the weekend, or any suitable schedule. Every communication session with the distribution server uses energy thus it should be limited as much as possible. This is only possible if the second unit includes the long-range second communication unit.

The user will at the parcel locker forward the received user code using the near-field communication unit. The second controller will match the user code to an electronic token and then communicate the electronic token linked to the user code, using the short-range second communication unit, to the short-range locker communication unit which causes the parcel locker to unlock the compartment door such that the user can collect the package.

In the case, where the user code inputted through the second does not match one or more electronic tokens stored on the autonomous second unit, then the second controller may be configured to cause the long-range second communication unit to communicate with the distribution server to update the stored list of electronic tokens linked to user codes. The matching can be performed by the user code being a number such as a 16-bit number or 32-bit number or 128-bit number or greater, wherein the one or more electronic tokens are linked to a specific number the electronic tokens are matched if the user code matches with said specific number. The act of matching can be performed using other solutions.

The autonomous second unit will afterwards compare the updated list of user codes with the received user code and in case of a match, then communicate the electronic token linked to the user code, using the short-range second communication unit, to the short-range locker communication unit which causes the parcel locker to unlock the compartment door such that the user can collect the package.

In the cases where there is no match between the user code and electronic tokens, then the autonomous second will do nothing and optionally go into a hibernation mode wherein no user code can be inputted through the near-field communication unit to limit a person inputting several user codes in bad faith.

The autonomous second unit may include an illumination unit to communicate with the user by displaying a green color or red color as a function of a matching user code or non-matching user code.

The second controller may have a table as shown below stored on the at least one second memory.

| **User code** | **Electronic token** | **Parcel locker ID** |
|---|---|---|
| 111111111 | Token #1 | 54348 |
| 222222222 | Token #2 | 54348 |
| 333333333 | Token #3 | 54348 |
| 444444444 | Token #4 | 54351 |
| ... | ... | ... |
| i i i i i i i i | Token #i | #X |

The numbers are chosen at random and are non-limiting. The user code will typically be in base 2. The user code can be a 16-bit number or 32-bit number or 64-bit number or 128-bit number or greater.

For this table, the input of an 8-digit number through the near-field communication unit will cause the autonomous second unit to communicate the electronic token in the same row to the parcel locker in the same row. The third column is only required in the cases wherein the autonomous second unit should be able to communicate with two or more parcel lockers.

The parcel locker may comprise a first energy storage for powering the parcel locker or be hardwired to power.

The second energy storage may be a suitable battery unit or a hydrogen storage and fuel cell. The second energy storage may have enough energy to power the autonomous second unit for three years, preferably for five years, or more preferably for 10 years.

In an embodiment, the memory and the program code may further be configured to cause the long-range second communication unit to communicate with a distribution server to update the one or more user codes and the one or more electronic tokens as a function of pre-set period or when receiving a non-matching user code. This enables the autonomous second unit to be autonomous as no party has to send instructions to the second unit.

In an embodiment, the second unit may comprise
- a first part including at least a near-field communication unit to be attached to an exterior side of one compartment door of the compartment doors; and
- a second part attached to an interior side of said compartment door,
wherein said compartment door comprises at least one aperture and the first part and the second part of the the second unit being at least electronically connected through the at least one aperture. Optionally the first and second part are also mechanically connected through the at least one aperture.

The interior side is the side of the gate facing the inside of the compartment, while the exterior side is the side facing the ambient atmosphere.

All electronics including the second energy storage can be installed in the first part of the autonomous second unit, however the second energy storage and the second controller are preferably forming part of the second part of the autonomous second unit in part because the second energy storage can be rather large, and it limits the possibility of tinkering or manipulating the second controller.

In an embodiment, the short-range second communication unit may comprise a short-range antenna and the optional long-range second communication unit may comprise a long-range antenna.

The short-range antenna is preferably positioned on the exterior side of the one compartment door of the compartment doors. This improves the ability to communicate compared to being on the inner side.

The long-range antenna is preferably positioned on the exterior side of the one compartment door of the compartment doors. This improves the ability to communicate compared to being on the inner side.

The first part of the autonomous second unit must include the near-field communication unit and preferably one or two antennas of the second communication unit i.e., the antennas of the short-range second communication unit and the optional long-range second communication unit as this ensures better wireless strength.

An object of the invention by a service point for distribution of items, wherein the service point comprises
- one or more parcel lockers at least controllable via short-range communication, wherein the one or more parcel lockers comprises a plurality of compartments including compartment doors with lock units for controlling access to the plurality of compartments, a parcel control unit, and a short-range parcel communication unit, and
- a parcel locker with an autonomous second unit as previously described, wherein the autonomous second unit is configured to communicate with the one or more parcel lockers via short-range second communication unit.

In this embodiment the autonomous second unit may communicate with any of the parcel lockers forming part of the service point.

The autonomous second unit could be positioned on a separate wall or pylon instead of the parcel locker since all communication is wireless, however, that would require additional service of the service point and that would increase the time needed to set up a parcel locker or to retrofit a parcel locker in-field.

An object of the invention by a method for opening a compartment door of a compartment using a near-field communication unit, the parcel locker comprises a plurality of compartments including compartment doors with lock units for controlling access to the plurality of compartments, a parcel control unit including a short-range parcel communication unit, and an autonomous second unit comprising a near-field communication unit, a second energy storage, a second controller, and a second communication unit including a short-range second communication unit for communicating with the parcel locker, and optionally a long-range second communication unit for communicating with a distribution server, wherein the second controller performs steps of either;
- receiving a user code via the near-field communication unit; and
- matching the received user code with one or more electronic tokens stored on the autonomous second unit; and
- transmitting the one or more electronic tokens to the short-range parcel communication unit as a function of the step of matching, wherein the electronic token will cause the parcel locker to unlock a compartment door,
   and/or
- receiving one or more electronic tokens via the near-field communication unit; and
- transmitting the one or more electronic tokens to the short-range parcel communication unit, wherein the electronic token will cause the parcel locker to unlock a compartment door.

Thereby, a recipient of a package can collect a package or item from the parcel locker using a complementary near-field communication unit for forwarding a user code or one or more electronic tokens, which user code or one or more electronic tokens the recipient has received in any way possible such as by SMS, by e-mail, by an app. the parcel locker could also be operated by a person sending a package or returning a package, where the package is placed in one of the compartments.

The autonomous second unit may upon receiving the electronic synchronisation token go into a hibernation mode to conserve energy as the autonomous second unit then knows that the compartment has been opened. In other embodiments the second unit enters a hibernation mode to conserve energy as a function of a timer. The synchronisation with the distribution server can be performed by the parcel locker, when the next smart phone connects to the parcel as described in WO2019161870 or WO2019161872 by piggybacking.

In an embodiment, wherein the parcel locker may be as described earlier in the patent application or in any one of claims 6 to 9 or the parcel locker is part of a service point as described in claim 10.

In an embodiment, wherein the autonomous second unit may be performing the following;
- transmitting via the long-range second communication unit the user code to the distribution server as a function of a non-matching user code,
- receiving via the long-range second communication unit an electronic token from the distribution server as a function of the user code matching the electronic token,
- transmitting the electronic token to the short-range parcel communication unit, wherein the electronic token will cause the parcel locker to unlock the compartment door.

The autonomous second unit will in some cases not be updated at the time when a person arrives at the parcel locker or service point to unlock a lock unit in order to get access to a compartment. In the situation, wherein the user code inputted through the near-field communication unit does not match a stored user code, then by performing the steps mentioned above, the autonomous second unit will in case of a match on the distribution server receive the electronic token linked to said user code matching the electronic token. Thereby, it is ensured that the autonomous second unit is useable at all times.

The step of receiving may include receiving all user codes not yet received by the autonomous second unit including the electronic tokens linked to the user codes.

In an embodiment, the autonomous second unit may perform a step of hibernating between steps of receiving a user pin code. The most valuable resource of the autonomous second unit is that energy and hibernating will enable the second unit to save energy. In the hibernation state both the short-range second communication unit and the optional long-range second communication unit are hibernating, and the short-range second communication unit only wakes up, when the autonomous second unit is communicating with a parcel locker. This is contrary to for example the parcel locker, wherein the short-range parcel communication unit continuously advertises.

In an embodiment, the method may comprise steps of
- transmitting the electronic synchronisation token to the distribution server;
- receiving an electronic acknowledgment token from the distribution server.

These two steps enable the autonomous second unit to server-side synchronization such that the distribution server is updated on the status of a compartment as this will enable the compartment to be assigned a new package or enables the server to inform a receiver that a package can be collected from a compartment. These steps do not need to be performed immediately after receiving the electronic synchronisation token from the parcel locker but can be performed with a delay without affecting the effectiveness of the parcel locker as packages are in many cases assigned to the parcel locker once or twice a day. Thus, if server-side synchronisation is performed before the assignment of packages then it will not affect the effectiveness.

The server-side synchronisation is more important than synchronisation of the parcel locker. It is therefore not required that the autonomous second unit transmits the electronic acknowledgment token to the parcel locker as the parcel locker does not need to be updated to function properly. If the parcel locker receives instructions to open compartment X, then the parcel locker will open compartment X regardless of prior actions at the parcel locker.

In an embodiment, the autonomous second unit may perform a step of validating a user code by performing a checksum calculation, and the step of matching is only performed as a function of passing the step of validating. Alternatively, the autonomous second unit only performs a step of communicating with a distribution server to update the one or more user codes and the one or more electronic tokens as a function of passing the step of validating.

This enables the autonomous second unit to reduce the energy needed to function in day-to-day function. The step of validating prevents the autonomous second unit from performing energy consuming functions when receiving most erroneous inputs.

An object of the invention is achieved by a kit for forming a service point, the kit comprising
- one or more parcel lockers for distribution of items, the one or more parcel lockers comprises
   - a plurality of compartments including compartment doors with lock units for controlling access to the plurality of compartments,
   - a short-range parcel communication unit,
   - a parcel locker controller comprising at least one processor and at least one locker memory that includes program code, wherein the memory and the program code is configured to cause the processor to instruct one or more of the lock units to open as a function of a received electronic token via the short-range parcel communication unit;
- an autonomous second unit comprising
   - a near-field communication unit for receiving a user code and/or electronic token;
   - a second energy storage for powering the second unit;
   - a second communication unit including a short-range second communication unit for communicating with the parcel locker, and optional a long-range second communication unit for communicating with a distribution server;
   - a second controller comprising at least one second processor and at least one second memory including program code, wherein the memory and the program code is configured to cause the processor to either

   match a received user code with one or more electronic tokens stored on the second memory, and cause the short-range second communication unit to send the linked electronic token to the short-range parcel communication unit as a function of a positive match; and/or
   forward an electronic token received by a recipient via the near-field communication unit to the short-range parcel communication unit.

Thereby, the kit can be used to install a service point anywhere which can be controlled by at least an autonomous second unit. The second unit does not need to be attached to any one of the parcel lockers however in most cases the autonomous second unit will be attached to one of the parcel lockers.

### Description of the Drawing

Fig. 1 illustrates an autonomous second unit;
Fig. 2 illustrates an embodiment of a parcel locker with an autonomous second unit;
Fig. 3 illustrates another embodiment of a parcel locker with an autonomous second unit;
Fig. 4 illustrates a service point comprising three parcel lockers wherein an autonomous second unit is attached to one of the three parcel lockers;
Fig. 5 illustrates an embodiment of a parcel locker wherein an autonomous second unit is positioned adjacent to the parcel locker; and
Fig. 6 illustrates a method for server-side pairing of a parcel locker to and an autonomous second unit.

### Detailed Description of the Invention

| **Item** | **No** |
|---|---|
| Service point | 100 |
| Parcel locker | 110, 110A,110B... 110N |
| Compartment | 120 |
| Compartment door | 122 |
| Parcel control unit | 130 |
| Short-range parcel communication unit | 132 |
| Autonomous second unit | 200 |
| near-field communication unit | 210 |
| Second energy storage | 220 |
| Second controller | 230 |
| Second processor | 232 |
| Second memory | 234 |
| Second communication unit | 240 |
| Short-range second communication unit | 242 |
| Short-range antenna | 243 |
| Long-range second communication unit | 244 |
| Long-range antenna | 245 |
| Distribution server | 300 |
| | |
| Method for server-side pairing a parcel locker with an autonomous second unit | 1000 |
| Attaching | 1100 |
| Server-side pairing | 1200 |
| Exchanging | 1210 |
| Linking | 1220 |
| Sending | 1230 |
| Opening | 1300 |
| Creating | 1400 |

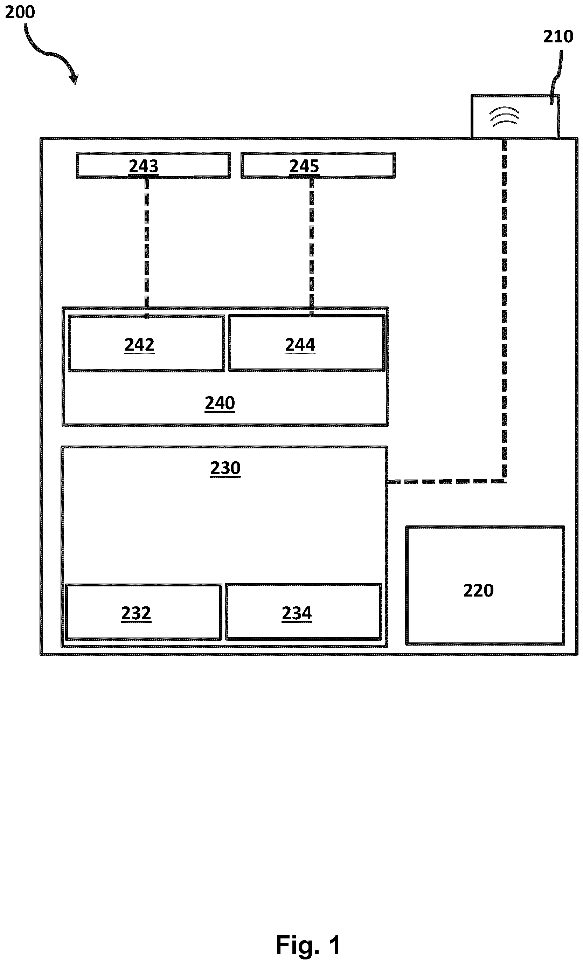

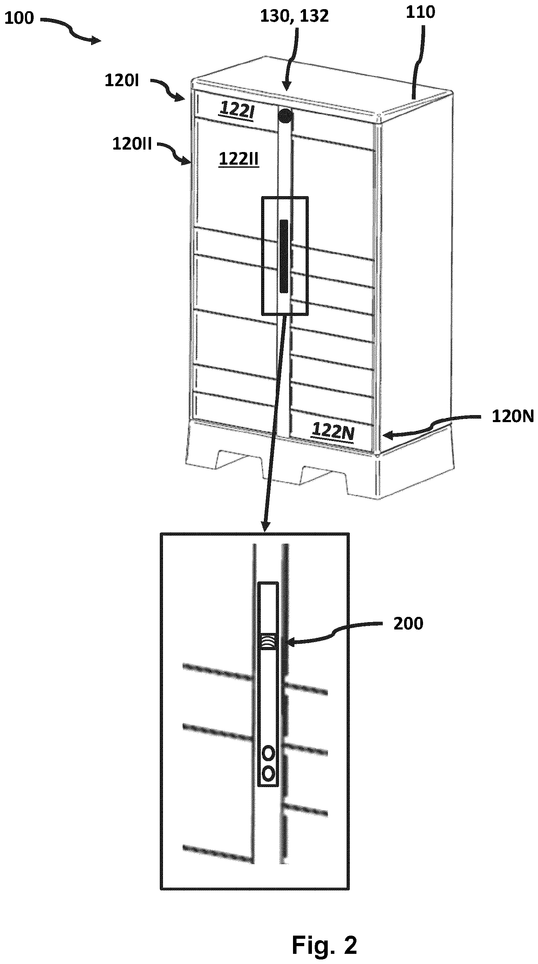

Fig. 1 illustrates an autonomous second unit 200. The autonomous second unit 200 comprises a second near-field communication unit 210 for receiving a user pin code. In this application, user code is the code forwarded by a user through the near-field communication unit 210. The near-field communication unit 210 must be placed accessible for the user. Figures 2 to 5 provide a non-exhaustive list of examples of how the near-field communication unit 210 can be placed.

The autonomous second unit 200 further comprises a second energy storage 220 for powering the second unit 200. The second energy storage 220 may be a battery cell or a hydrogen storage and a fuel cell. The battery cell may comprise primary batteries such as a wet-type battery, preferably Li-SoCl2 batteries, or manganese batteries, or iron disulfate (LiFeS2) batteries, lithium manganese dioxide (LiMnO2) batteries, or lithium metal-oxide batteries, or high impedance batteries. Li-SoCl2 batteries have a very low self-discharge rate and can provide energy for five, ten or more years. The power connection from the second energy storage 220 is not shown but the second energy storage 220 powers the components of the autonomous second unit 200.

The autonomous second unit 200 further comprises a second communication unit 240 including a short-range second communication unit 242 for communicating with the parcel locker 110. The autonomous second unit 200 optionally further comprises a long-range second communication unit 244 for communicating with a distribution server 300. The short-range second communication unit 242 may be Bluetooth or Bluetooth Low-Energy (BLE) or a similar wireless protocol. The long-range second communication unit 244 may be a GSM unit or NB-IOT unit or a similar long-range wireless protocol.

The short-range second communication unit 242 and the long-range second communication unit 244 have respectively a short-range antenna 243 and a long-range antenna 245. Both antennas 243, 245 should be positioned to achieve the best possible communication strength. The antennas 243, 245 are, when the autonomous second unit 200 is attached to a parcel locker 110, preferably positioned on an exterior side of the parcel locker 110. The parcel locker 110 is typically made of metal and this will in many cases reduce the communication strength if the antennas 243,245 are positioned on the inside of the parcel locker 110. The short-range antenna 243 can be placed inside the parcel locker 110 while achieving sufficient communication strength to communicate with a parcel locker 110.

The autonomous second unit 200 further comprises a second controller 230 comprising at least one second processor 232 and at least one second memory 234 including program code, one or more user codes and one or more electronic tokens linked to the one or more user codes. The memory and the program code is configured to cause the processor to either match a received user code with one or more electronic tokens stored on the second memory, and cause the short-range second communication unit 242 to send the one or more electronic tokens to the short-range parcel communication unit 132 as a function of a positive match and/or the memory and the program code is configured to cause the processor to forward an electronic token received by a recipient via the near-field communication unit 210 to the short-range parcel communication unit 132.

Fig. 2 illustrates an embodiment of a parcel locker 110 with an autonomous second unit. The parcel locker 110 is a service point 100. The parcel locker 110 is for distribution of items. The parcel locker 110 may be a lean locker being powered by a first energy storage such as a battery cell or battery cells. The parcel locker 110 can be hardwired to a power source.

The parcel locker 110 comprises a plurality of compartments 20 including compartment doors 22 with lock units for controlling access to the plurality of compartments 120. The compartments may have various shapes and sizes. The plurality of compartments 120 are typically positioned in racks forming one or more columns of compartments 120.

The parcel locker 110 comprises a short-range parcel communication unit 132 such as Bluetooth or Bluetooth Low Energy (BLE) or a similar wireless protocol. The short-range parcel communication unit 132 is illustrated by a black circle, however the short-range parcel communication unit 132 could be placed at a different location of the parcel locker. The parcel locker 110 comprises a parcel locker controller 130 comprising at least one processor and at least one locker memory that includes program code, wherein the locker memory and the program code is configured to cause the processor to instruct one or more of the lock units to open as a function of a received electronic token via the short-range parcel communication unit 132.

The autonomous second unit 200 has the features as described in figure 1, however only the near-field communication unit 210 is shown. The near-field communication unit 210 is in this specific embodiment positioned between two different columns of compartments 120. A close-up of the near-field communication unit 210 is shown, however the shape can be different. The other components of the autonomous second unit 200 can be positioned on an exterior side of the parcel locker 110. However, in most cases, all components except the near-field communication unit 210 and the antennas 243, 245 are positioned inside the parcel locker 110 to protect from wear and tear or from a person trying to force entry into the autonomous second unit 200.

It is important that the short-range second communication unit 242 and the short-range parcel communication unit 132 are compatible such that said units 242, 132 can communicate and exchange tokens.

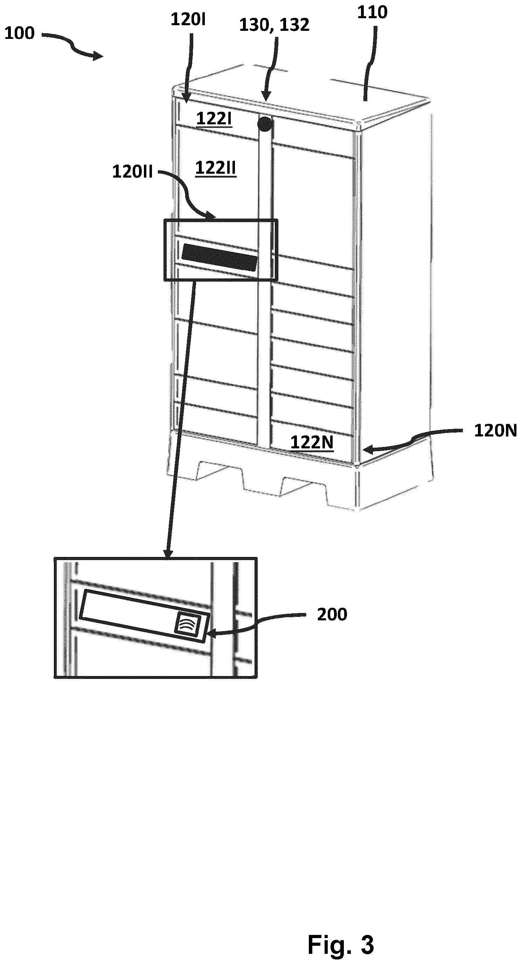

Fig. 3 illustrates another embodiment of a parcel locker 110 with an autonomous second unit 200.

The parcel locker 110 is a service point 100. The parcel locker 110 is for distribution of items. The parcel locker 110 may be a lean locker being powered by a first energy storage such as a battery cell or battery cells. The parcel locker 110 can be hardwired to a power source.

The parcel locker 110 comprises a plurality of compartments 20 including compartment doors 22 with lock units for controlling access to the plurality of compartments 120. The compartments may have various shapes and sizes. The plurality of compartments 120 are typically positioned in racks forming one or more columns of compartments 120.

The parcel locker 110 comprises a short-range parcel communication unit 132 such as Bluetooth or Bluetooth Low-Energy (BLE) or a similar wireless protocol. The short-range parcel communication unit 132 is illustrated by black circle, however the short-range parcel communication unit 132 could be placed at a different location of the parcel locker. The parcel locker 110 comprises a parcel locker controller 130 comprising at least one processor and at least one locker memory that includes program code, wherein the locker memory and the program code is configured to cause the processor to instruct one or more of the lock units to open as a function of a received electronic token via the short-range parcel communication unit 132.

The autonomous second unit 200 has the features as described in figure 1, however only the near-field communication unit 210 is shown. The near-field communication unit 210 is in this specific embodiment positioned on the compartment door 122. A close-up of the near-field communication unit 210 is shown, however the shape can be different. The other components of the autonomous second unit 200 can be positioned on an exterior side of the parcel locker 110. However, in most cases, all components except the near-field communication unit 210 and the antennas 243, 245 are positioned inside the parcel locker 110 to protect from wear and tear or from a person trying to force entry into the autonomous second unit 200.

It is important that the short-range second communication unit 242 and the short-range parcel communication unit 132 are compatible such that said units 242, 132 can communicate and exchange tokens.

In this embodiment, the autonomous second unit 200 may be assembled of a first part including at least a near-field communication unit 210 to be attached to the exterior side of the parcel locker 110 and a second part attached to the interior side of the parcel locker 110, wherein the first part and the second part are at least electronically connected through said at least one aperture. The at least one aperture is formed in one of the compartment doors 122 and it enables a maintenance person to fast and efficiently perform the method for server-side pairing of the parcel locker 110 and the autonomous second unit 200. Due to the design, the method is able to be performed on an in-field parcel locker 100. Thus, parcel lockers 110 can be retrofitted with the autonomous second unit 200.

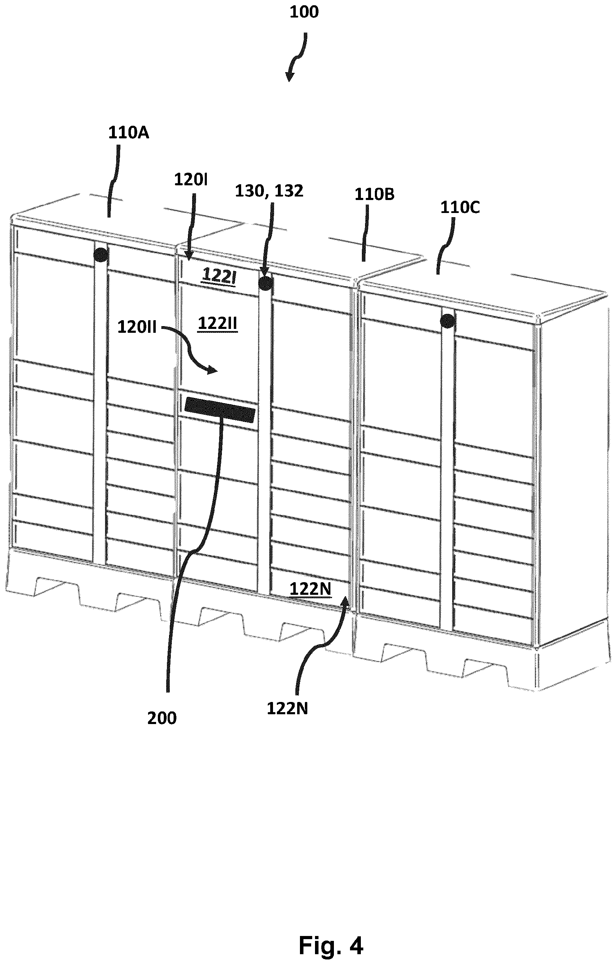

Fig. 4 illustrates a service point 100 comprising three parcel lockers 110A, 110B, 110C wherein an autonomous second unit 200 is attached to one of the three parcel lockers 110B. The two parcel lockers 110A, 110C can be any standard parcel locker 110 such as the parcel lockers shown in figure 2, or figure 3, or figure 5, but without the autonomous second unit 200.

The middle parcel locker 110B is equipped with an autonomous second unit 200. Thus, the middle parcel locker 110B can be similar or identical to the embodiment disclosed in figure 2 or figure 3. The autonomous second unit 200 has the same features as described for figure 1.

The autonomous second unit 200 is only attached to the middle parcel locker 110B, but the short-range second communication unit 242 enables communication with the other adjacent parcel lockers 110A, 110C, such that user codes inputted through the near-field communication unit 210 can cause the near-field communication unit 210 to communicate and send one or more electronic tokens to the any of the parcel lockers 110A, 110B, 110C forming part of the service point 100.

The autonomous second unit 200 can be attached to any of the three parcel lockers 110A, 110B, 110C.

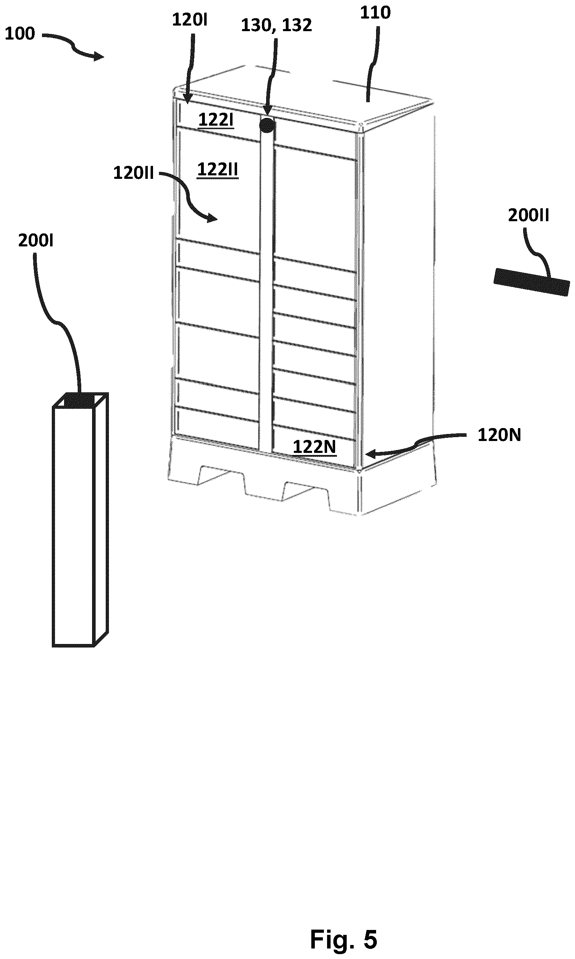

Fig. 5 illustrates an embodiment of a parcel locker 110, wherein two autonomous second units 200I, 200II are positioned adjacent to the parcel locker 110. The parcel locker 110 and the autonomous second unit 200 can have the features described in figures 1 to 4.

The figure illustrates that one of the two autonomous second units 200I can be attached on a pylon next to the parcel locker 110. This works completely similar to the autonomous second unit 200 being attached to a neighbouring parcel locker 110 as shown in figure 4.

The figure also illustrates that the other of the two autonomous second units 200II can be attached to a wall adjacent to the parcel locker 110. This works completely similar to the autonomous second unit 200 being attached to a neighbouring parcel locker 110 as shown in figure 4.

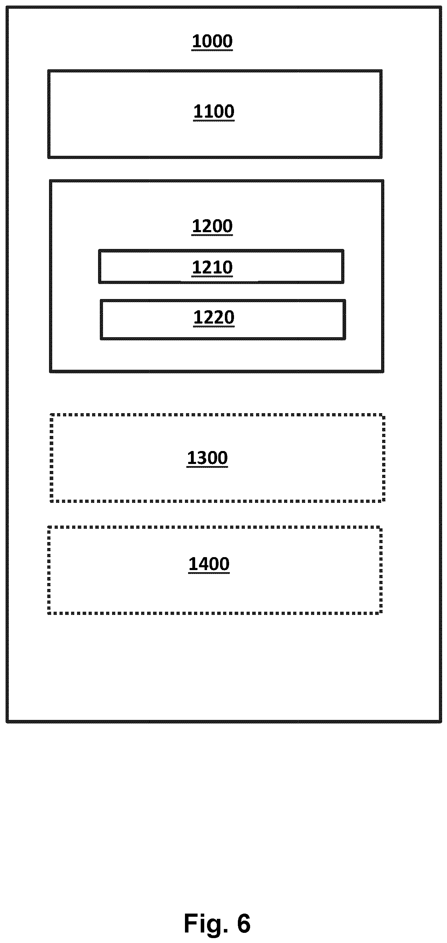

Fig. 6 illustrates a method 1000 for server-side pairing of a parcel locker 100 and an autonomous second unit 200. The parcel locker 110 comprises a plurality of compartments 120 including compartment doors 122 with lock units for controlling access to the plurality of compartments 120, and a parcel control unit 130 including a short-range parcel communication unit 132, wherein the parcel control unit 130 is configured to control the lock unit as a function of instructions received via the short-range parcel communication unit 132.

The method 1000 comprises a step of attaching 1100 an autonomous second unit 200 to the parcel locker 110, wherein the autonomous second unit 200 comprises a near-field communication unit 210, a second energy storage 220, a second controller 230, and a second communication unit 240. The second communication unit 240 includes a short-range second communication unit 242 and a long-range second communication unit 242 for communicating with a distribution server. An example of the autonomous second unit 200 is described in figure 1. The step of attaching can be performed by screwing, interlocking, using an adhesive or by similar means.

The method 1000 comprises a server-side pairing 1200 of the autonomous second unit 200 and the parcel locker 110 by
- exchanging 1210 encryption keys with a distribution server 300; and/or
- linking 1220 the autonomous second unit 200 to the parcel locker 110 at the distribution server 300 by updating a server database and/or by sending 1230 a service point ID linked to the parcel locker 110 to the autonomous second unit 200.

The exchanging of encryption keys enables the distribution server 300 and the autonomous second unit 200 to have a secure encrypted communication. The exchanging can be performed by the person attaching the autonomous second unit 200 using a smart device with a suitable app for the exchange. However, the exchange could also be via the optional long-range second communication unit, or the exchange could be performed by other means.

The second step of the server-side pairing 1200 is performed by a step of linking 1220 such that the autonomous second unit 200 is aware of the service point ID linked to the parcel locker such that the autonomous second unit 200 can provide said service point ID to the distribution server 300 during any communication and/or the distribution server 300 has a table linking the second unit ID to the service point. The two solutions are equivalent.

The step of server-side pairing 1200 includes linking 1220 the autonomous second unit 200 to one or more neighbouring parcel lockers 110A,110B... 110N positioned near or adjacent to the parcel locker 110 with the autonomous second unit 200. This can be added to the table on the distribution server 300 or by the autonomous second unit 200 sending the service point ID, which will be the same for all the parcel lockers 110. This ensures that only one of the parcel lockers 1 10A, 110B... 110N at a service point 100 must be equipped with a second unit 200. This reduces the number of autonomous second units 200 needed for a parcel locker group.

In an embodiment, the method 1000 may include steps of
- opening 1300 a compartment door 122 of a compartment of the plurality of compartments 120.
- creating 1400 at least one aperture in said compartment door 122; and the step of attaching 1100 is performed by attaching 1100 the autonomous second unit 200 to said compartment door 122 using the at least one aperture.

Thereby, theautonomous second unit 200 can be attached to an in-field parcel locker 110, such that the parcel locker group can be retrofitted.

The autonomous second unit 200 may comprise a first part including at least a near-field communication unit 210 to be attached to the exterior side of the parcel locker 110 and a second part attached to the interior side of the parcel locker 110. The first part and the second part of the autonomous second unit 200 are at least electronically connected through said at least one aperture.

The first part and the second part of the autonomous second unit 200 may be connected using screws extending through the one or more apertures.

## Claims

1. A method (1000) for server-side pairing of a parcel locker (110) and an autonomous second unit (200), wherein the parcel locker (110) comprises a plurality of compartments (120) including compartment doors (122) with lock units for controlling access to the plurality of compartments (120), and a parcel control unit (130) including a short-range parcel communication unit (132), wherein the parcel control unit (130) is configured to control the lock unit as a function of instructions received via the short-range parcel communication unit (132), wherein the method (1000) comprises steps of
- attaching (1100) an autonomous second unit (200) to the parcel locker (110), wherein the autonomous second unit (200) comprising
a near-field communication unit (210), a second energy storage (220), a second controller (230), and a second communication unit (240) including a short-range second communication unit (242) and optionally a long-range second communication unit (242) for communicating with a distribution server (300),
- server-side pairing (1200) of the autonomous second unit (200) and the parcel locker (110) by
- exchanging (1210) encryption keys with a distribution server (300) via the short-range second communication unit (242) through a third-party device or via the optional long-range second communication unit (242), and/or
- linking (1220) the autonomous second unit (200) to the parcel locker (110) at the distribution server (300) by updating a server database and/or by sending (1230) a service point ID linked to the parcel locker (110) to the autonomous second unit (200).

2. A method (1000) according to claim 1, wherein the method (1000) is performed on an in-field parcel locker (110).

3. A method (1000) according to claim 1 or 2, wherein the step of server-side pairing (1200) includes linking (1220) the autonomous second unit (200) to one or more neighbouring parcel lockers (110A,110B... 110N) positioned near or adjacent to the parcel locker (110) with the autonomous second unit (200).

4. A method (1000) according to any one of claims 1-3, wherein the method (1000) includes steps of
- opening (1300) a compartment door (122) of a compartment of the plurality of compartments (120);
- creating (1400) at least one aperture in said compartment door (122); and
the step of attaching (1100) is performed by attaching (1100) the autonomous second unit (200) to said compartment door (122) using the at least one aperture.

5. A method (1000) according to claim 4, wherein the autonomous second unit (200) comprises a first part including at least a second (210) to be attached to the exterior side of the parcel locker (110) and a second part attached to the interior side of the parcel locker (110), wherein the first part and the second part are at least electronically connected through said at least one aperture.

6. A parcel locker (110) for distribution of items, the parcel locker (110) comprises
- a plurality of compartments (20) including compartment doors (22) with lock units for controlling access to the plurality of compartments (120),
- a short-range parcel communication unit (132),
- a parcel locker controller comprising at least one processor and at least one locker memory that includes program code, wherein the locker memory and the program code is configured to cause the processor to instruct one or more of the lock units to open as a function of a received electronic token via the short-range parcel communication unit (132);
- an autonomous second unit (200) comprising
- a near-field communication unit (210) for receiving a user code and/or electronic token;
- a second energy storage (220) for powering the second unit (200);
- a second communication unit (240) including a short-range second communication unit (242) for communicating with the parcel locker (110);
- a second controller (230) comprising at least one second processor and at least one second memory including program code, wherein the memory and the program code is configured to cause the processor to either
match a received user code with one or more electronic tokens stored on the second memory, and cause the short-range second communication unit (242) to send the one or more electronic tokens to the short-range parcel communication unit (132) as a function of a positive match; and/or
forward an electronic token received by a recipient via the near-field communication unit (210) to the short-range parcel communication unit (132).

7. A parcel locker (110) according to claim 6, wherein the second communication unit (240) comprises a long-range second communication unit (244) for communicating with a distribution server (300) and the memory and the program code is further configured to cause the long-range second communication unit (244) to communicate with a distribution server (300) to update the one or more stored codes and the one or more electronic tokens as a function of a pre-set period or when receiving a non-matching user code.

8. A parcel locker (110) according to claim 6 or 7, wherein the second unit (200) comprises
- a first part including at least the second communication unit (210) to be attached to an exterior side of one compartment door of the compartment doors (122); and
- a second part attached to an interior side of said compartment door (122), wherein said compartment door (122) comprises at least one aperture and the first part and the second part of the second communication unit (200) being at least electronically connected through the at least one aperture.

9. A parcel locker (110) according to claim 8, wherein the short-range second communication unit (242) comprises a short-range antenna (243) and the short-range antenna (243) and is positioned on the exterior side of the one compartment door of the compartment doors (122), and optionally
the long-range second communication unit (244) comprises a long-range antenna (245), wherein the long-range antenna (245) is positioned on the exterior side of the one compartment door of the compartment doors (122).

10. A service point (100) for distribution of items, wherein the service point (100) comprises
- one or more parcel lockers (110B, 110C...) at least controllable via short-range communication, wherein the one or more parcel lockers (110) comprises a plurality of compartments (120) including compartment doors (122) with lock units for controlling access to the plurality of compartments (122), a parcel control unit (130), and a short-range parcel communication unit (132) and
- a parcel locker (110A) with an autonomous second unit (200) according to any one of claims 6 to 9, wherein the autonomous second unit (200) is configured to communicate with the one or more parcel lockers (110B, 110C...) via the short-range second communication unit.

11. A method for opening a compartment door of a compartment (122) using a near-field communication unit (210), the parcel locker (110) comprises a plurality of compartments (120) including compartment doors (122) with lock units for controlling access to the plurality of compartments (122), a parcel control unit (130) including a short-range parcel communication unit (132), and an autonomous second unit (200) comprising a near-field communication unit (210), a second energy storage (220), a second controller (230), and a second communication unit (240) including a short-range second communication unit (242) for communicating with the parcel locker (210),
wherein the second controller (242) performs steps of either;
- receiving a user code via the near-field communication unit (210); and
- matching the received user code with one or more electronic tokens stored on the autonomous second unit (200); and
- transmitting the one or more electronic tokens to the short-range parcel communication unit (132) as a function of the step of matching (2200), wherein the electronic token will cause the parcel locker (110) to unlock a compartment door (122),
and/or
- receiving one or more electronic tokens via the near-field communication unit (210); and
- transmitting the one or more electronic tokens to the short-range parcel communication unit (132), wherein the electronic token will cause the parcel locker (110) to unlock a compartment door (122).

12. A method according to claim 11, wherein the parcel locker (110) is according to any one of claims 6 to 9 or the parcel locker (110) is part of a service point (100) according to claim 10.

13. A method according to any one of claim 11 or 12, wherein the second communication unit (240) further includes a long-range second communication unit (242) for communicating with a distribution server (300), wherein the autonomous second unit (200) performs the following;
- transmitting via the long-range second communication unit (242) the user code to the distribution server (300) as a function of a non-matching user code,
- receiving via the long-range second communication unit (242) an electronic token from the distribution server (300) as a function of the user code matching the electronic token,
- transmitting the electronic token to the short-range parcel communication unit (132), wherein the electronic token will cause the parcel locker (110) to unlock the compartment door.

14. A method according to any one of claims 11 to 13, wherein the autonomous second unit (200) performs a step of hibernating between steps of receiving a user code or electronic token.

15. A method according to any one of claims 11 to 14, wherein the method comprises steps of
- transmitting the electronic synchronization token to the distribution server (300);
- receiving an electronic acknowledgment token from the distribution server (300).

16. A kit for forming a service point, the kit comprising
- one or more parcel lockers (110) for distribution of items, the one or more parcel lockers (110) comprises
- a plurality of compartments (20) including compartment doors (22) with lock units for controlling access to the plurality of compartments (120),
- a short-range parcel communication unit (132),
- a parcel locker controller comprising at least one processor and at least one locker memory that includes program code, wherein the memory and the program code is configured to cause the processor to instruct one or more of the lock units to open as a function of a received electronic token via the short-range parcel communication unit (132);
- an autonomous second unit (200) comprising
- a near-field communication unit (210) for receiving a user code and/or electronic token;
- a second energy storage (220) for powering the second unit (200);
- a second communication unit (240) including a short-range second communication unit (242) for communicating with the parcel locker (110), and optional a long-range second communication unit (244) for communicating with a distribution server (300);
- a second controller (230) comprising at least one second processor and at least one second memory including program code, wherein the memory and the program code is configured to cause the processor to either
Match a received user code with one or more electronic tokens stored on the second memory, and cause the short-range second communication unit (242) to send the linked electronic token to the short-range parcel communication unit (132) as a function of a positive match; and/or
forward an electronic token received by a recipient via the near-field communication unit (210) to the short-range parcel communication unit (132).

17. An autonomous second unit (200) comprising
- a near-field communication unit (210) for receiving a user code and/or electronic token;
- a second energy storage (220) for powering the second unit (200);
- a second communication unit (240) including a short-range second communication unit (242) for communicating with a parcel locker (110);
- a second controller (230) comprising at least one second processor and at least one second memory including program code, wherein the memory and the program code is configured to cause the processor to either
match a received user code with one or more electronic tokens stored on the second memory, and cause the short-range second communication unit (242) to send the linked one or more electronic tokens to a short-range parcel communication unit (132) of a parcel locker as a function of a positive match; and/or
forward an electronic token received by a recipient via the near-field communication unit (210) to a short-range parcel communication unit (132) of a parcel locker.
